# EUROPÄISCHE PATENTANMELDUNG

(11) **EP 4 166 376 A1**
(43) Veröffentlichungstag der Anmeldung: **19.04.2023**
(21) Anmeldenummer: 22195008.2
(22) Anmeldetag: 12.09.2022
(51) Int. Cl.: B60L 53/14, B60L 53/22, E01C 19/26

(54) **BODENBEARBEITUNGSMASCHINE**

(30) Priorität: 12.10.2021 DE 102021126365
(71) Anmelder: Hamm AG, 95643 Tirschenreuth (DE)
(72) Erfinder: Dagner, Josef, Altenstadt (DE); Braunschläger, Stefan, Bärnau (DE); Sperber, Michael, Waldsassen (DE); Bäuml, Stefan, Tirschenreuth (DE)
(74) Vertreter: Ruttensperger Lachnit Trossin Gomoll

(57) **Zusammenfassung**

Eine Bodenbearbeitungsmaschine, insbesondere Bodenverdichter, umfasst wenigstens eine an einem Maschinenrahmen (24) getragene Batterie (28) und wenigstens einen aus der wenigstens einen Batterie (28) gespeisten Verbraucher elektrischer Energie (30), ferner umfassend wenigstens ein an dem Maschinenrahmen (24) lösbar getragenes Wechsel-Lademodul (32) mit einem Batterie-Anschlussbereich (95) zum Anschließen des wenigstens einen Wechsel-Lademoduls (32) an ein Batteriemanagementsystem (34) und mit einem Spannungsversorgung-Anschlussbereich (84) zum Anschließen des wenigstens einen Wechsel-Lademoduls (32) an eine externe Spannungsquelle.

## Beschreibung

Die vorliegende Erfindung betrifft eine Bodenbearbeitungsmaschine, wie zum Beispiel einen Bodenverdichter, bei welcher an einem Maschinenrahmen wenigstens eine Batterie getragen ist, um einen bzw. eine Mehrzahl von an einer derartigen Bodenbearbeitungsmaschine vorgesehenen Verbrauchern elektrischer Energie zu speisen.

Bei konventionell angetriebenen Bodenbearbeitungsmaschinen, bei welchen die für den Betrieb derselben erforderliche Energie durch ein als Brennkraftmaschine ausgebildetes Antriebsaggregat bereitgestellt wird, können im Betrieb der Bodenbearbeitungsmaschinen die daran vorgesehenen Verbraucher elektrischer Energie aus einer Batterie über ein Bordspannungsnetz gespeist werden. Die Batterie kann über einen mit dem Antriebsaggregat gekoppelten Generator geladen werden. Ein Anschluss an eine externe Spannungsquelle zum Aufladen einer derartigen Batterie ist grundsätzlich nicht erforderlich.

Durch den Übergang zu elektrisch betriebenen Bodenbearbeitungsmaschinen, bei welchen die Energie zum Betreiben derselben durch aus einer oder mehreren Batterien gespeiste Elektromotoren bereitgestellt wird, wird es erforderlich, eine Schnittstelle zu schaffen, über welche die Batterien derartiger Bodenbearbeitungsmaschinen wieder aufgeladen werden können, wenn diese im Arbeitsbetrieb vollständig oder teilweise entladen worden sind.

Es ist die Aufgabe der vorliegenden Erfindung, eine Bodenbearbeitungsmaschine, insbesondere Bodenverdichter, vorzusehen, welche eine variable Anbindung an eine externe Energiequelle zum Aufladen einer oder mehrerer Batterien aufweist.

Erfindungsgemäß wird diese Aufgabe gelöst durch eine Bodenbearbeitungsmaschine, insbesondere Bodenverdichter, gemäß Anspruch 1. Diese Bodenbearbeitungsmaschine umfasst wenigstens eine an einem Maschinenrahmen getragene Batterie und wenigstens einen aus der wenigstens einen Batterie gespeisten Verbraucher elektrischer Energie.

Ferner umfasst die Bodenbearbeitungsmaschine wenigstens ein an dem Maschinenrahmen lösbar getragenes Wechsel-Lademodul mit einem Batterie-Anschlussbereich zum Anschließen des wenigstens einen Wechsel-Lademoduls an ein Batteriemanagementsystem und mit einem Spannungsversorgung-Anschlussbereich zum Anschließen des wenigstens einen Wechsel-Lademoduls an eine externe Spannungsquelle.

Bei einer erfindungsgemäß aufgebauten Bodenbearbeitungsmaschine ist das eine Schnittstelle zwischen einer oder mehreren Batterien bzw. einem Batteriemanagementsystem und einer externen Spannungsquelle zum Aufladen der Batterien bereitstellende Lademodul als Wechsel-Lademodul nicht fest an der Bodenbearbeitungsmaschine verbaut, sondern ist mit dieser lösbar gekoppelt. Dies bedeutet, dass das Wechsel-Lademodul beispielsweise nur zur Durchführung eines Ladevorgangs an einer Bodenbearbeitungsmaschine vorgesehen werden kann, nach dem vollständigen Aufladen einer oder mehrerer Batterien jedoch wieder von der Bodenbearbeitungsmaschine entfernt werden kann und beispielsweise genutzt werden kann, um bei einer anderen Bodenbearbeitungsmaschine einen Ladevorgang durchzuführen. Somit kann ein einziges Wechsel-Lademodul in Verbindung mit einer Mehrzahl von Bodenbearbeitungsmaschinen genutzt werden, und es ist nicht erforderlich, bei einer Mehrzahl von an einer Baustelle vorgesehenen Bodenbearbeitungsmaschinen jeweils separate Lademodule vorzuhalten.

Zur stabilen, gleichwohl jedoch leicht lösbaren Ankopplung eines Wechsel-Lademoduls an eine Bodenbearbeitungsmaschine kann das wenigstens eine Wechsel-Lademodul vermittels einer Aufhängungsanordnung an dem Maschinenrahmen lösbar getragen sein, wobei die Aufhängungsanordnung umfasst:
- einen Vertikal-Abstützbereich an dem wenigstens einen Wechsel-Lademodul und einen Vertikal-Gegenabstützbereich an dem Maschinenrahmen zur im Wesentlichen vertikalen Abstützung des wenigstens einen Wechsel-Lademoduls bezüglich des Maschinenrahmens,
- einen Horizontal-Abstützbereich an dem wenigstens einen Wechsel-Lademodul und einen Horizontal-Gegenabstützbereich an dem Maschinenrahmen zur im Wesentlichen horizontalen Abstützung des wenigstens einen Wechsel-Lademoduls bezüglich des Maschinenrahmens.

Dabei kann eine definierte Positionierung des wenigstens einen Wechsel-Lademoduls dadurch gewährleistet werden, dass der Vertikal-Gegenabstützbereich wenigstens ein Vertikal-Eingriffselement mit einer Vertikal-Eingriffsaussparung umfasst, und dass der Vertikal-Abstützbereich wenigstens einen in die wenigstens eine Vertikal-Eingriffsaussparung eingreifend zu positionierenden Vertikal-Eingriffsvorsprung umfasst.

Um unter Ausnutzung der Schwerkraft den Eingriffszustand zwischen einem Vertikal-Eingriffsvorsprung und einer diesen aufnehmenden Vertikal-Eingriffsaussparung aufrecht zu erhalten, kann die wenigstens eine Vertikal-Eingriffsaussparung im Wesentlichen in Richtung nach oben offen sein.

Ferner kann für eine hohe Betriebssicherheit vor allem unter Berücksichtigung der für die Durchführung eines Ladevorgangs im Allgemeinen erforderlichen hohen elektrischen Spannungen bzw. der bei einem Ladevorgang fließenden starken elektrischen Ströme das Vertikal-Eingriffselement mit elektrisch isolierendem Material aufgebaut sein.

Eine definierte Positionierung des wenigstens einen Wechsel-Lademoduls kann dadurch unterstützt werden, dass der Horizontal-Gegenabstützbereich wenigstens ein Horizontal-Eingriffselement mit einer Horizontal-Eingriffsaussparung umfasst, und dass der Horizontal-Abstützbereich wenigstens einen in die wenigstens eine Horizontal-Eingriffsaussparung eingreifend zu positionierenden Horizontal-Eingriffsvorsprung umfasst. Bei einer alternativen Ausgestaltungsart kann der Horizontal-Gegenabstützbereich wenigstens ein Horizontal-Eingriffselement mit einer Horizontal-Abstützfläche umfassen, und der Horizontal-Abstützbereich kann wenigstens einen an der Horizontal-Abstützfläche abstützbaren Horizontal-Abstützbereich umfassen.

Auch hierbei kann die Schwerkraftwirkung für einen Zusammenhalt genutzt werden, wenn die wenigstens eine Horizontal-Eingriffsaussparung im Wesentlichen in seitlicher Richtung, also beispielsweise im Wesentlichen quer zur Öffnungsrichtung der Vertikal-Eingriffsaussparung, offen ist.

Für eine hohe Betriebssicherheit ist vorzugsweise auch das Horizontal-Eingriffselement mit elektrisch isolierendem Material aufgebaut.

Wenn bei an dem Maschinenrahmen getragenem wenigstens einem Wechsel-Lademodul der Vertikal-Gegenabstützbereich und der Horizontal-Gegenabstützbereich in horizontaler Richtung zu einem Massenschwerpunkt des wenigstens einen Wechsel-Lademoduls versetzt und an der gleichen Seite bezüglich des Massenschwerpunkts angeordnet sind, ist allein unter Schwerkrafteinwirkung dafür gesorgt, dass insbesondere der Horizontal-Abstützbereich und der Horizontal-Gegenabstützbereich zuverlässig in Abstützwechselwirkung miteinander gehalten bzw. vorgespannt sind.

Das wenigstens eine Wechsel-Lademodul kann einen im Wesentlichen plattenartigen, beispielsweise als Blechumformteil aufgebauten Ladegerätträger und wenigstens ein an dem Ladegerätträger festgelegtes Ladegerät umfassen. Dabei kann der Ladegerätträger den Vertikal-Abstützbereich und den Horizontal-Abstützbereich bereitstellen.

Um insbesondere dann, wenn auch während der Durchführung eines Arbeitsvorgangs ein Wechsel-Lademodul am Maschinenrahmen verbleiben soll, ungewollte Bewegungen des Wechsel-Lademoduls zu vermeiden, kann eine Arretieranordnung vorgesehen sein zum Arretieren des wenigstens einen Wechsel-Lademoduls bezüglich des Maschinenrahmens.

Um die Arretierwechselwirkung erzeugen zu können, kann die Arretieranordnung wenigstens ein an dem wenigstens einen Wechsel-Lademodul angeordnetes Arretierelement und in Zuordnung zu jedem Arretierelement ein an dem Maschinenrahmen festgelegtes Gegen-Arretierelement umfassen, wobei das Einbauen und das Loslösen eines Wechsel-Lademoduls dann besonders einfach durchführbar ist, wenn jedes Arretierelement durch Verrastung in Arretiereingriff mit einem zugeordneten Gegen-Arretierelement bringbar ist.

Für eine leichte Handhabung bzw. einen leicht durchzuführenden Transport kann an dem wenigstens einen Wechsel-Lademodul wenigstens ein Handgriff vorgesehen sein.

An dem Maschinenrahmen kann eine zwischen einer Offenstellung und einer Schließstellung bewegbare, beispielsweise haubenartig ausgebildete Rahmenabdeckung getragen sein. Um sicherzustellen, dass die Bodenbearbeitungsmaschine nicht ungewollt in Betrieb gesetzt wird, wenn diese an eine externe Spannungsquelle angeschlossen ist, ist dabei vorzugsweise vorgesehen, dass die Rahmenabdeckung bei in seinem Spannungsversorgung-Anschlussbereich an eine externe Spannungsquelle angeschlossenem wenigstens einem Wechsel-Lademodul nicht in der Schließstellung positionierbar ist. Im Allgemeinen ist zu unterstellen, dass eine Bedienperson eine Bodenbearbeitungsmaschine nicht in Betrieb nimmt, wenn die Rahmenabdeckung nicht in ihrer Schließstellung ist. Das Verhindern, dass diese Schließstellung eingenommen wird, wenn die Bodenbearbeitungsmaschine bzw. ein Wechsel-Lademodul an eine externe Spannungsquelle angeschlossen ist, erhöht somit die Sicherheit gegen eine ungewollte Inbetriebnahme in einem derartigen Zustand.

Der wenigstens eine aus der wenigstens einen Batterie gespeiste Verbraucher elektrischer Energie kann beispielsweise umfassen:
- ein Bordspannungssystem,
oder/und
- ein elektrohydraulisches Betriebssystem beispielsweise mit wenigstens einer durch einen Elektromotor anzutreibenden Hydraulikpumpe und wenigstens einem von der wenigstens eine Hydraulikpumpe gespeisten Hydraulikmotor,
oder/und
- ein elektrisches Betriebssystem mit wenigstens einem durch wenigstens einen Elektromotor anzutreibenden Antriebsstrang.

Die Variabilität im Einsatz kann dadurch weiter erhöht werden, dass an wenigstens einem Wechsel-Lademodul wenigstens zwei Ladegeräte unterschiedlicher Bauart vorgesehen sind. Durch das Vorsehen von Ladegeräten unterschiedlicher Bauart an ein und dem selben Wechsel-Lademodul kann dieses in Verbindung mit Bodenbearbeitungsmaschinen unterschiedlicher Bauart, insbesondere mit unterschiedlichen Batterien, welche unterschiedliche Ladevorgänge, beispielsweise unterschiedliche Ladeströme oder Ladespannungen erfordern, eingesetzt werden.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Bodenbearbeitungsmasch ine;
- Fig. 2: in perspektivischer Ansicht eines Teils eines Maschinenrahmens eines Vorderwagens des Bodenverdichters der Fig. 1;
- Fig. 3: eine Seitenansicht eines Teils des Maschinenrahmens des Vorderwagens der Bodenbearbeitungsmaschine der Fig. 1 mit Komponenten eines elektrohydraulischen Betriebssystems der Bodenbearbeitungsmaschine;
- Fig. 4: eine andere perspektivische Ansicht des in Fig. 2 erkennbaren Bereichs des Maschinenrahmens;
- Fig. 5: eine perspektivische Ansicht eines Wechsel-Lademoduls;
- Fig. 6: das Wechsel-Lademodul während des Vorgangs zum Anbringen desselben an dem Maschinenrahmen des Bodenverdichters der Fig. 1;
- Fig. 7: eine prinzipartige Darstellung zum Veranschaulichen der lösbaren Anbringung eines Wechsel-Lademoduls an dem Maschinenrahmen;
- Fig. 8: eine Draufsicht auf den Vorderwagen der Bodenbearbeitungsmaschine der Fig. 1 bei vom Maschinenrahmen entfernter Rahmenabdeckung.

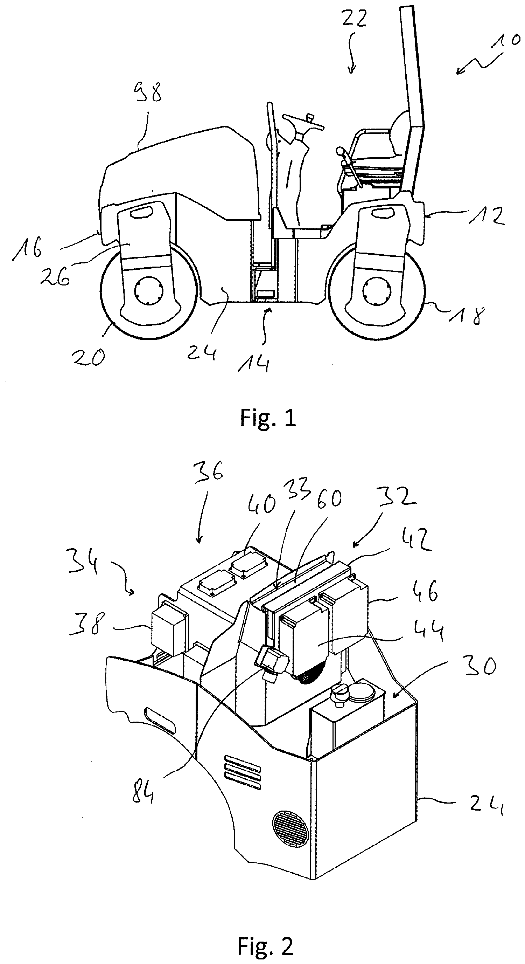

In Fig. 1 ist eine als Bodenverdichter ausgebildete Bodenbearbeitungsmaschine allgemein mit 10 bezeichnet. Die Bodenbearbeitungsmaschine 10 umfasst einen Hinterwagen 12 und einen in einem Gelenkverbindungsbereich 14 zum Lenken der Bodenbearbeitungsmaschine 10 mit dem Hinterwagen 12 schwenkbar verbundenen Vorderwagen 16. Am Hinterwagen 12 ist eine Bodenbearbeitungswalze 18 drehbar getragen. Am Vorderwagen 16 ist eine Bodenbearbeitungswalze 20 drehbar getragen. Am Hinterwagen 14 ist ferner ein Bedienstand 22 für eine Bedienperson vorgesehen, von welchem aus eine Bedienperson die Bodenbearbeitungsmaschine 10 beispielsweise zum Durchführen eines Verdichtungsvorgangs in Betrieb setzen und bedienen kann.

Der Vorderwagen 16 der Bodenbearbeitungsmaschine 10 umfasst einen allgemein mit 24 bezeichneten Maschinenrahmen. Der Maschinenrahmen 24 kann aus einer Vielzahl von Einzelkomponenten zusammengesetzt sein, welche miteinander beispielsweise durch Verschweißen oder/und Verschrauben oder in sonstiger Weise verbunden sein können. An dem Maschinenrahmen 24 ist die am Vorderwagen 16 vorgesehene Bodenbearbeitungswalze 20 über einen bügelartigen und gleichermaßen einem Teil des Maschinenrahmens 24 bereitstellenden Walzenträger 26 drehbar getragen.

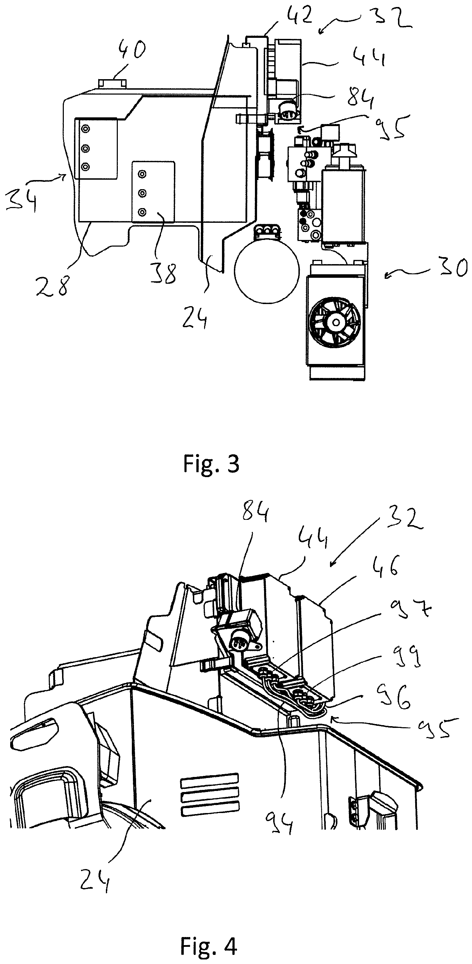

Die in Fig. 1 dargestellte Bodenbearbeitungsmaschine 10 ist eine grundsätzlich elektrisch betriebene Bodenbearbeitungsmaschine. Dies bedeutet, dass die Energie zum Betreiben der Bodenbearbeitungsmaschine 10 nicht durch ein als Brennkraftmaschine angetriebenes Antriebsaggregat geliefert wird, sondern durch eine Vielzahl von aus einer in Fig. 3 prinzipartig dargestellten Batterie 28 gespeisten Verbrauchern elektrischer Energie. Diese Verbraucher elektrischer Energie können beispielsweise ein Bordspannungsnetz der Bodenbearbeitungsmaschine 10 umfassen, über welche beispielsweise eine Beleuchtung, Steuergeräte und dergleichen mit elektrischer Energie gespeist werden. Ferner bildet ein in Fig. 3 prinzipartig dargestelltes elektrohydraulisches Betriebssystem 30 der Bodenbearbeitungsmaschine 10 einen derartigen Verbraucher elektrischer Energie. Das elektrohydraulische Betriebssystem 30 kann beispielsweise ein elektrohydraulisches Fahrantriebssystem mit einer durch einen Elektromotor angetriebenen Fahr-Hydraulikpumpe und in Zuordnung zu jeder Bodenbearbeitungswalze 18, 20 einem durch die Fahr-Hydraulikpumpe mit Druckfluid gespeisten Fahr-Hydraulikmotor umfassen. Das elektrohydraulische Betriebssystem 30 kann ferner ein elektrohydraulisches Lenksystem umfassen, bei welchem eine durch einen Elektromotor angetriebene Lenk-Hydraulikpumpe zum Verschwenken des Vorderwagens 16 bezüglich des Hinterwagens 12 in eine Lenkeinheit eingespeistes Druckfluid bereitgestellt wird.

Um die Batterie 28 aufzuladen und im Arbeitsbetrieb zum Speisen der verschiedenen Verbraucher elektrischer Energie zu entladen, sind ein nachfolgend detaillierter beschriebenes Wechsel-Lademodul 32 sowie ein allgemein mit 34 bezeichnetes Batteriemanagementsystem vorgesehen. Das Wechsel-Lademodul 32 stellt eine Schnittstelle zwischen dem Batteriemanagementsystem 34 und einer externen Spannungsquelle bereit. Über das Batteriemanagementsystem 34, welches eine Vielzahl von Leistungselektronik-Systembereichen 36, wie z. B. Wechselrichten 38 und DC/DC-Wandlern 40, umfassen kann, wird einerseits im Ladevorgang die Batterie 38 in geeigneter Weise mit einer Ladespannung beaufschlagt, und wird im Arbeitsbetrieb die Batterie unter Umsetzung der durch diese bereitgestellten Betriebsspannung in eine Bordnetzspannung und eine für den Betrieb der vorangehend erläuterten Elektromotor erforderliche 3-Phasen-Wechselspannung entladen. Es ist darauf hinzuweisen, dass ein derartiges Batteriemanagementsystem 34 bzw. allgemein die Leistungselektronik der Bodenbearbeitungsmaschine 10 bzw. auch das Bordspannungsnetz eine Vielzahl weiterer Komponenten oder Systembereiche umfassen kann, die in den Figuren nicht dargestellt sind.

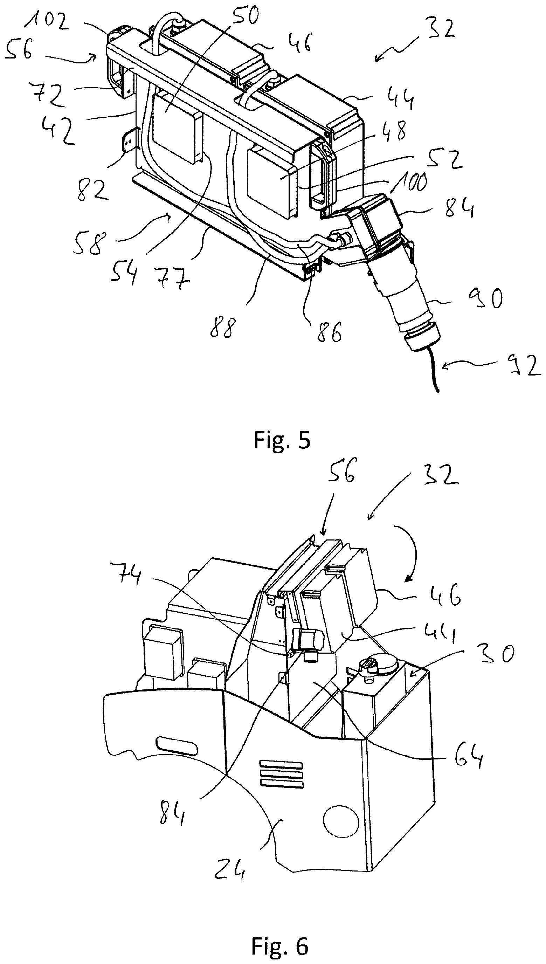

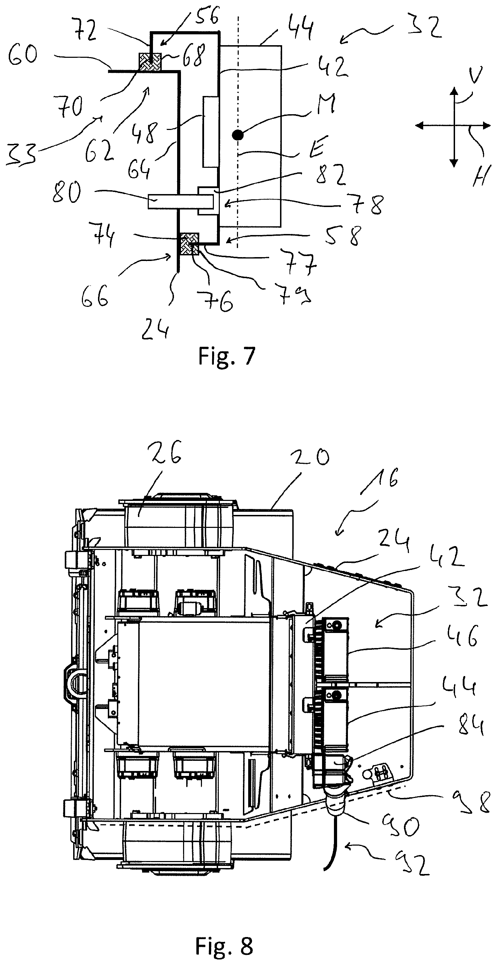

Das in Fig. 5 in perspektivischer Ansicht und in Fig. 7 in prinzipartiger Seitenansicht dargestellte Wechsel-Lademodul 32 ist bei der in Fig. 1 dargestellten Bodenbearbeitungsmaschine 10 nicht fest verbaut, sondern ist vermittels einer Aufhängungsanordnung 33 an diese lösbar angekoppelt, so dass das Wechsel-Lademodul 32 ohne größere Arbeitsvorgänge leicht von der Bodenbearbeitungsmaschine 10 entfernt bzw. an dieser angebracht werden kann. Dazu umfasst das Wechsel-Lademodul 32 einen beispielsweise als Blechumformteil aufgebauten, plattenartigen Ladegerätträger 42. An diesem sind im dargestellten Ausgestaltungsbeispiel nebeneinander zwei zueinander beispielsweise baugleiche Ladegeräte 44, 46 getragen. In Fig. 5 ist zu erkennen, dass in Zuordnung zu jedem der Ladegeräte 44, 46 bzw. einem daran jeweils vorgesehenen Lüfter 48, 50 im Ladegerätträger 42 eine Öffnung 52, 54 vorgesehen ist, durch welche ein jeweiliger Lüfter 48, 50 sich hindurcherstrecken kann. Die Ladegeräte 44, 46 können mit dem Ladegerätträger 42 beispielsweise durch Verschraubung fest verbunden sein.

Der Ladegerätträger 42 weist bei am Maschinenrahmen 24 des Vorderwagens 16 getragenem Wechsel-Lademodul 32 in einem oberen Bereich desselben einen mit einem nach unten , also im Wesentlichen in einer Vertikalrichtung V abgebogenen Randbereich bereitgestellten Vertikal-Abstützbereich 56 auf. Gleichermaßen weist der Ladegerätträger 42 mit einem in diesem Zustand in einem unteren Bereich liegenden und seitlich bzw. quer zum Vertikal-Abstützbereich 56, also im Wesentlichen in einer Horizontalrichtung H abgebogenen Randbereich einen Horizontal-Abstützbereich 58 auf.

In Zuordnung zu dem Vertikal-Abstützbereich 56 des Ladegerätträgers 52 bzw. des Wechsel-Lademoduls 32 ist an einer im Wesentlichen horizontal orientierten Wand 60 des Maschinenrahmens 24 ein Vertikal-Gegenabstützbereich 62 ausgebildet. Gleichermaßen ist in Zuordnung zu dem Horizontal-Abstützbereich 58 des Ladegerätträgers 42 bzw. des Wechsel-Lademoduls 32 an einer im Wesentlichen vertikal orientierten Wand 64 des Maschinenrahmens 24 ein Horizontal-Gegenabstützbereich 66 vorgesehen. Am Vertikal-Gegenabstützbereich 62 ist das Wechsel-Lademodul 32 im Wesentlichen in der Vertikalrichtung V nach unten abgestützt. Am Horizontal-Gegenabstützbereich 66 ist das Wechsel-Lademodul 32 im Wesentlichen in der Horizontalrichtung H seitlich, insbesondere in Richtung auf die Wand 64 des Maschinenrahmens 24 zu, abgestützt.

Der Vertikal-Gegenabstützbereich 62 umfasst ein an der Wand 60 festgelegtes, aus elektrisch isolierendem Material, beispielsweise Kunststoffmaterial oder Keramikmaterial, aufgebautes Vertikal-Eingriffselement 68 mit einer im Wesentlichen in der Vertikalrichtung V nach oben offenen Vertikal-Eingriffsaussparung 70 auf. Der Vertikal-Abstützbereich 56 umfasst einen durch den abgebogenen Randbereich des Ladegerätträgers 42 bereitgestellten und im Anbringungszustand in die Vertikal-Eingriffsaussparung 70 eingreifend positionierten Vertikal-Eingriffsvorsprung 72. Der Eingriffszustand des Vertikal-Eingriffsvorsprungs 72 mit der Vertikal-Eingriffsaussparung 70 wird allein durch die Schwerkraftwirkung aufrecht erhalten.

Der Horizontal-Gegenabstützbereich 66 umfasst ein an der Wand 64 festgelegtes und mit elektrisch isolierendem Material, beispielsweise Kunststoffmaterial oder Keramikmaterial, aufgebautes Horizontal-Eingriffselement 74 mit einer darin ausgebildeten Horizontal-Eingriffsaussparung 76. Die Horizontal-Eingriffsaussparung 76 ist von der das Horizontal-Eingriffselement 74 tragenden Wand 64 seitlich weg im Wesentlichen in der Horizontalrichtung H offen.

Der Horizontal-Abstützbereich des Wechsel-Lademoduls 32 umfasst einen durch den im Wesentlichen horizontaler Richtung abgebogenen Randbereich bereitgestellten Horizontal-Eingriffsvorsprung 77, welcher im Anbringungszustand in die Horizontal-Eingriffsaussparung 76 eingreifend positioniert ist. Bei einer alternativen Ausgestaltungsart kann das Horizontal-Eingriffselement 74 beispielsweise ohne Horizontal-Eingriffsaussparung ausgebildet sein und eine Horizontal-Abstützfläche 79 bereitstellen, an welcher ein Horizontal-Abstützbereich des Wechsel-Lademoduls 32, welcher beispielsweise so ausgebildet sein kann, wie der Horizontal-Eingriffsvorsprung 77, im Wesentlichen in der Horizontalrichtung H abgestützt werden kann.

Die Fig. 7 zeigt, dass im Anbringungszustand der Vertikal-Gegenabstützbereich 62 und der Horizontal-Gegenabstützbereich 66 und dementsprechend auch der Vertikal-Abstützbereich 56 bzw. der Horizontal-Abstützbereich 58 bezüglich eines Massenschwerpunkts M des Wechsel-Lademoduls 32 und einer diesen beispielsweise schneidenden bzw. enthaltenden Vertikalebene E in der Horizontalrichtung H zur gleichen Seite versetzt angeordnet sind. Dadurch erzeugt die im Massenschwerpunkt M wirkende Masse bzw. Gewichtskraft ein Drehmoment um den Bereich der Wechselwirkung des Vertikal-Eingriffsvorsprungs 72 mit der Vertikal-Eingriffsaussparung 70, welches in der Darstellung der Fig. 7 im Uhrzeigersinn wirkt und den Horizontal-Eingriffsvorsprung 76 in die Horizontal-Eingriffsaussparung 74 vorspannt. Allein durch die Schwerkraftwirkung ist somit ein zuverlässiger Zusammenhalt des Wechsel-Lademoduls 32 mit dem Maschinenrahmen 24 gewährleistet.

Um insbesondere dann, wenn auch während eines Arbeitsbetriebs ein derartiges Wechsel-Lademodul 32 am Maschinenrahmen 24 bzw. an der Bodenbearbeitungsmaschine 10 verbleiben soll, eine Bewegung des Wechsel-Lademoduls 32 bezüglich des Maschinenrahmens 24 zu vermeiden, ist zum Unterstützen eines stabilen Zusammenhalts vorzugsweise in einem in der Horizontalrichtung H unteren Bereich des Wechsel-Lademoduls 32 eine allgemein mit 78 bezeichnete Arretieranordnung vorgesehen. Die Arretieranordnung 78 umfasst an dem Maschinenrahmen 24 beispielsweise beidseits des Wechsel-Lademoduls 32 ein Gegen-Arretierelement 80, welches mit einem zugeordneten, an Wechsel-Lademodul 32 vorgesehenen Arretierelement 82 durch Verrastung in Arretiereingriff gebracht wird, wenn im Zuge eines in Fig. 6 veranschaulichten Schwenkvorgangs das Wechsel-Lademodul 32 mit dem am Ladegerätträger 42 vorgesehenen Horizontal-Eingriffsvorsprung 77 auf die Horizontal-Eingriffsaussparung 76 zu bzw. in diese hinein bewegt wird. Bei diesem Vorgang können beispielsweise die am Maschinenrahmen 24 angeordneten Gegen-Arretierelemente 80 seitlich verformt werden, bis sie in Rasteingriff mit den Arretierelementen 82 treten. Bei hergestelltem Rasteingriff ist das Wechsel-Lademodul 32 auch unter Berücksichtigung der im Arbeitsbetrieb auftretenden Vibrationen bzw. Schwingungen zuverlässig am Maschinenrahmen 24 gehalten.

Am Wechsel-Lademodul 32 ist neben den Ladegeräten 44, 46 ein Spannungsversorgung-Anschlussbereich 84 vorgesehen. Dieser ist über Verbindungskabel 86, 88 mit jedem der Ladegeräte 44, 46 verbunden. Der Spannungsversorgung-Anschlussbereich 84 ist zur Aufnahme eines Anschlusssteckers 90 eines allgemein mit 92 bezeichneten Ladekabels ausgebildet, über welches das Wechsel-Lademodul 32 an eine externe Spannungsquelle angeschlossen werden kann.

Wie in Fig. 4 veranschaulicht, kann das Wechsel-Lademodul 32 bzw. jedes der Ladegeräte 44, 46 desselben über jeweilige Leitungsverbindungen 94, 96 in einem Batterie-Anschlussbereich 95 an das Batteriemanagementsystem 34 angeschlossen werden. Die Leitungsverbindungen 94, 96 können beispielsweise über jeweilige Steckkontakte 97, 99 in Verbindung mit dem jeweils zugeordneten Ladegerät 44, 46 gebracht werden, so dass auch in diesem Bereich eine leichte Lösbarkeit des Wechsel-Lademoduls 32 von dem Batteriemanagementsystem 34 bzw. der Bodenbearbeitungsmaschine 10 gewährleistet ist.

In Fig. 8 ist der Vorderwagen 16 der Bodenbearbeitungsmaschine 10 in Draufsicht dargestellt. Dabei ist in der Fig. 8 der Vorderwagen 16 ohne die in Fig. 1 erkennbare, haubenartige Rahmenabdeckung 98 dargestellt. Die Rahmenabdeckung 98 kann beispielsweise im vorderen, also in Fig. 1 links erkennbaren Bereich des Vorderwagens 16 an diesem schwenkbar angebracht sein und zwischen der in Fig. 1 dargestellten Schließstellung, in welcher sie den oberen Bereich des Maschinenrahmens 24 und damit alle daran vorgesehenen Systembereiche, insbesondere auch ein am Maschinenrahmen 24 getragenes Wechsel-Lademodul 32, überdeckt, und einer nach vorne weg verschwenkten Offenstellung bewegbar getragen sein. Zum Anbringen bzw. Entfernen eines Wechsel-Lademoduls 32 an den Maschinenrahmen 24 bzw. von dem Maschinenrahmen 24 wird die Rahmenabdeckung 98 in ihrer Offenstellung positioniert, so dass Zugriff auf den Bereich des Maschinenrahmens 24 besteht, in welchem ein Wechsel-Lademodul 32 positioniert oder zu positionieren ist.

In Fig. 8 ist im unteren Bereich mit einer Strichlinie die Kontur der in der Schließstellung positionierten Rahmenabdeckung 98 erkennbar. Es ist auch erkennbar, dass bei an dem Spannungsversorgung-Anschlussbereich 84 angeschlossenen Ladekabel 92 dessen Anschlussstecker 90 seitlich in denjenigen Bereich hervorsteht, in welchem bei in der Schließstellung positionierter Rahmenabdeckung 98 diese seitlich am Maschinenrahmen 24 positioniert ist bzw. diesen übergreift. Dies bedeutet, dass bei an den Spannungsversorgungs-Anschlussbereich 84 angestecktem Ladekabel 92 die Rahmenabdeckung 98 grundsätzlich nicht in ihre Schließstellung bewegt werden kann, da dies durch den seitlich vorstehenden Anschlussstecker 90 des Ladekabels 92 verhindert wird. Somit kann ein Ladevorgang nur dann durchgeführt werden, wenn die Rahmenabdeckung 98 nicht in ihrer Schließstellung ist, sondern beispielsweise in ihrer Offenstellung positioniert ist. Dies stellt sicher, dass nicht irrtümlicherweise bei an das Wechsel-Lademodul 32 angeschlossenem Ladekabel 92 die Bodenbearbeitungsmaschine 10 in Betrieb genommen wird. Die nicht in ihrer Schließstellung positionierbare Rahmenabdeckung 98 ist für eine Bedienperson ein Hinweis darauf, dass ein Ladekabel 92 an das Wechsel-Lademodul 32 angeschlossen ist und daher die Bodenbearbeitungsmaschine 10 nicht in Betrieb genommen werden kann.

Durch den Einsatz eines an der Bodenbearbeitungsmaschine nicht fest verbauten, sondern in einfacher Art und Weise lösbar damit zu verbindenden Wechsel-Lademoduls besteht die Möglichkeit, ein- und dasselbe Wechsel-Lademodul zum Aufladen der Batterien verschiedener Bodenbearbeitungsmaschinen einzusetzen. Es muss nicht für jede Bodenbearbeitungsmaschine ein eigenes Lademodul vorgehalten werden. Diese Auswechselbarkeit eines Lademoduls kann dann in besonders vorteilhafter Weise genutzt werden, wenn beispielsweise die beiden oder mehrere daran vorgesehene Ladegeräte zueinander unterschiedliche Bauarten aufweisen und somit zum Laden verschiedener Batterien genutzt werden können. Es kann dann einund dasselbe Wechsel-Lademodul in Verbindung mit Bodenbearbeitungsmaschinen verschiedener Bauart bzw. in Verbindung mit verschiedenen Batterien genutzt werden.

Um diesen Wechsel des Wechsel-Lademoduls 32 einfach durchführen zu können, kann dieses beispielsweise beidseits an dem Ladegerätträger 42 Handgriffe 100, 102 aufweisen, die es einer Bedienperson ermöglichen, ein derartiges Wechsel-Lademodul 32 sicher zu greifen und in der vorangehend beschriebenen Art und Weise am Maschinenrahmen 24 zu positionieren oder von diesem zu entfernen.

Es ist abschließend darauf hinzuweisen, dass bei der erfindungsgemäßen Ausgestaltung einer Bodenbearbeitungsmaschine bzw. eines Wechsel-Lademoduls in besonders vorteilhafter Weise die vorangehend beschriebenen Systembereiche der Aufhängungsanordnung so gestaltet sind, dass diese in einer Vertikalrichtung V und einer Horizontalrichtung H wirken bzw. in Wechselwirkung miteinander treten, welche bei auf einem horizontalen Untergrund stehender Bodenbearbeitungsmaschine einer Vertikalen bzw. einer Horizontalen in einem Erdkoordinatensystem entsprechen. Die Erfindung kann jedoch gleichwohl verkörpert sein in einer Ausgestaltung, in welcher die Vertikalrichtung V nicht exakt der Vertikalen in einem Erdkoordinatensystem entspricht, sondern eine Richtung definiert, die im Wesentlichen einer oben-unten-Richtung entspricht und beispielsweise näher an der Vertikalen, als an der Horizontalen ist. Auch die Horizontalrichtung H könnte von der Horizontalen in einem Erdkoordinatensystem abweichen, beispielsweise aber näher an der Horizontalen, als an der Vertikalen sein.

## Patentansprüche

1. Bodenbearbeitungsmaschine, insbesondere Bodenverdichter, umfassend wenigstens eine an einem Maschinenrahmen (24) getragene Batterie (28) und wenigstens einen aus der wenigstens einen Batterie (28) gespeisten Verbraucher elektrischer Energie (30), ferner umfassend wenigstens ein an dem Maschinenrahmen (24) lösbar getragenes Wechsel-Lademodul (32) mit einem Batterie-Anschlussbereich (95) zum Anschließen des wenigstens einen Wechsel-Lademoduls (32) an ein Batteriemanagementsystem (34) und mit einem Spannungsversorgung-Anschlussbereich (84) zum Anschließen des wenigstens einen Wechsel-Lademoduls (32) an eine externe Spannungsquelle.

2. Bodenbearbeitungsmaschine nach Anspruch 1,
**dadurch gekennzeichnet, dass** das wenigstens eine Wechsel-Lademodul (32) vermittels einer Aufhängungsanordnung (33) an dem Maschinenrahmen (24) lösbar getragen ist, wobei die Aufhängungsanordnung umfasst:
- einen Vertikal-Abstützbereich (56) an dem wenigstens einen Wechsel-Lademodul (32) und einen Vertikal-Gegenabstützbereich (62) an dem Maschinenrahmen (24) zur im Wesentlichen vertikalen Abstützung des wenigstens einen Wechsel-Lademoduls (32) bezüglich des Maschinenrahmens (24),
- einen Horizontal-Abstützbereich (58) an dem wenigstens einen Wechsel-Lademodul (32) und einen Horizontal-Gegenabstützbereich (66) an dem Maschinenrahmen (24) zur im Wesentlichen horizontalen Abstützung des wenigstens einen Wechsel-Lademoduls (32) bezüglich des Maschinenrahmens (24).

3. Bodenbearbeitungsmaschine nach Anspruch 2,
**dadurch gekennzeichnet, dass** der Vertikal-Gegenabstützbereich (62) wenigstens ein Vertikal-Eingriffselement (68) mit einer Vertikal-Eingriffsaussparung (70) umfasst, und dass der Vertikal-Abstützbereich (56) wenigstens einen in die wenigstens eine Vertikal-Eingriffsaussparung (70) eingreifend zu positionierenden Vertikal-Eingriffsvorsprung (72) umfasst.

4. Bodenbearbeitungsmaschine nach Anspruch 3,
**dadurch gekennzeichnet, dass** die wenigstens eine Vertikal-Eingriffsaussparung (70) im Wesentlichen in Richtung nach oben offen ist, oder/und dass das Vertikal-Eingriffselement (68) mit elektrisch isolierendem Material aufgebaut ist.

5. Bodenbearbeitungsmaschine nach einem der Ansprüche 2-4,
**dadurch gekennzeichnet, dass** der Horizontal-Gegenabstützbereich (66) wenigstens ein Horizontal-Eingriffselement (74) mit einer Horizontal-Eingriffsaussparung (76) umfasst, und dass der Horizontal-Abstützbereich (58) wenigstens einen in die wenigstens eine Horizontal-Eingriffsaussparung (76) eingreifend zu positionierenden Horizontal-Eingriffsvorsprung (77) umfasst, oder dass der Horizontal-Gegenabstützbereich (66) wenigstens ein Horizontal-Eingriffselement (74) mit einer Horizontal-Abstützfläche (79) umfasst, und dass der Horizontal-Abstützbereich (58) wenigstens einen an der Horizontal-Abstützfläche (79) abstützbaren Horizontal-Abstützbereich umfasst.

6. Bodenbearbeitungsmaschine nach Anspruch 5,
**dadurch gekennzeichnet, dass** die wenigstens eine Horizontal-Eingriffsaussparung (76) im Wesentlichen seitlich offen ist, oder/und dass das Horizontal-Eingriffselement (74) mit elektrisch isolierendem Material aufgebaut ist.

7. Bodenbearbeitungsmaschine nach einem der Ansprüche 2-6,
**dadurch gekennzeichnet, dass** bei an dem Maschinenrahmen (24) getragenem wenigstens einem Wechsel-Lademodul (32) der Vertikal-Gegenabstützbereich (62) und der Horizontal-Gegenabstützbereich (66) in horizontaler Richtung zu einem Massenschwerpunkt (M) des wenigstens einen Wechsel-Lademoduls (32) versetzt und an der gleichen Seite bezüglich des Massenschwerpunkts (M) angeordnet sind.

8. Bodenbearbeitungsmaschine nach einem der Ansprüche 1-7,
**dadurch gekennzeichnet, dass** das wenigstens eine Wechsel-Lademodul (32) einen im Wesentlichen plattenartigen Ladegerätträger (42) und wenigstens ein an dem Ladegerätträger (42) festgelegtes Ladegerät (44, 46) umfasst.

9. Bodenbearbeitungsmaschine nach Anspruch 8, sofern auf Anspruch 2 rückbezogen,
**dadurch gekennzeichnet, dass** der Ladegerätträger (42) den Vertikal-Abstützbereich (56) und den Horizontal-Abstützbereich (58) bereitstellt.

10. Bodenbearbeitungsmaschine nach einem der Ansprüche 1-9,
**dadurch gekennzeichnet, dass** eine Arretieranordnung (78) vorgesehen ist zum Arretieren des wenigstens einen Wechsel-Lademoduls (32) bezüglich des Maschinenrahmens (24).

11. Bodenbearbeitungsmaschine nach Anspruch 10,
**dadurch gekennzeichnet, dass** die Arretieranordnung (78) wenigstens ein an dem wenigstens einen Wechsel-Lademodul (32) angeordnetes Arretierelement (82) und in Zuordnung zu jedem Arretierelement (82) ein an dem Maschinenrahmen (24) festgelegtes Gegen-Arretierelement (80) umfasst.

12. Bodenbearbeitungsmaschine nach Anspruch 11,
**dadurch gekennzeichnet, dass** jedes Arretierelement (82) durch Verrastung in Arretiereingriff mit einem zugeordneten Gegen-Arretierelement (80) bringbar ist.

13. Bodenbearbeitungsmaschine nach einem der Ansprüche 1-12,
**dadurch gekennzeichnet, dass** an dem wenigstens einen Wechsel-Lademodul (32) wenigstens ein Handgriff (100, 102) vorgesehen ist.

14. Bodenbearbeitungsmaschine nach einem der Ansprüche 1-13,
**dadurch gekennzeichnet, dass** an dem Maschinenrahmen (24) eine zwischen einer Offenstellung und einer Schließstellung bewegbare Rahmenabdeckung (98) getragen ist, und dass die Rahmenabdeckung (98) bei in seinem Spannungsversorgung-Anschlussbereich (84) an eine externe Spannungsquelle angeschlossenem wenigstens einem Wechsel-Lademodul (32) nicht in der Schließstellung positionierbar ist.

15. Bodenbearbeitungsmaschine nach einem der Ansprüche 1-14,
**dadurch gekennzeichnet, dass** der wenigstens eine aus der wenigstens einen Batterie (28) gespeiste Verbraucher elektrischer Energie umfasst:
- ein Bordspannungssystem,
oder/und
- ein elektrohydraulisches Betriebssystem (30) vorzugsweise mit wenigstens einer durch einen Elektromotor anzutreibenden Hydraulikpumpe und wenigstens einem von der wenigstens eine Hydraulikpumpe gespeisten Hydraulikmotor,
oder/und
- ein elektrisches Betriebssystem mit wenigstens einem durch wenigstens einen Elektromotor anzutreibenden Antriebsstrang.

16. Bodenbearbeitungsmaschine nach einem der Ansprüche 1-15,
**dadurch gekennzeichnet, dass** an wenigstens einem Wechsel-Lademodul (32) wenigstens zwei Ladegeräte (44, 46) unterschiedlicher Bauart vorgesehen sind.
